(19) Europäisches Patentamt
European Patent Office
Office européen des brevets

(11) **EP 3 260 311 A1**

(12) **EUROPÄISCHE PATENTANMELDUNG**

(43) Veröffentlichungstag:
**27.12.2017 Patentblatt 2017/52**

(51) Int Cl.:
**B60C 23/00** *(2006.01)* **B60C 23/06** *(2006.01)*

(21) Anmeldenummer: **17173903.0**

(22) Anmeldetag: **01.06.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **21.06.2016 DE 102016111313**

(71) Anmelder: **REHAU AG + Co**
**95111 Rehau (DE)**

(72) Erfinder: **OELSCHLEGEL, Alexander**
**95176 Konradsreuth (DE)**

(54) **VERFAHREN ZUR EINSTELLUNG DES REIFENDRUCKS EINES ZWEIRADES SOWIE ZWEIRAD**

(57)     Die Erfindung betrifft ein Verfahren zur, insbesondere personengewichtsabhängigen, Einstellung des Reifendrucks eines Zweirades (1). Hierbei wird beim Zweirad (1) unter der Einwirkung der Gewichtskraft ($N_F$) der das Zweirad (1) nutzenden Person sowie des Zweirad-Eigengewichts ($N_0$) die Abplattung (A) mindestens eines Reifens (5) des Zweirads (1), vorzugsweise beider Reifen (5), im Aufstandspunkt (P) des Reifens (5) gemessen. Daraufhin wird diese Abplattung (A) durch Einfüllen von Gas in den und/oder Ablassen von Gas aus dem Reifen (5) auf einen Abplattungs-Sollwert (As) eingestellt. Gegenstand der Erfindung ist auch ein Zweirad zur Durchführung dieses Verfahrens.

**Fig. 1b**

EP 3 260 311 A1

**Beschreibung**

Die Erfindung betrifft ein Verfahren zur Einstellung des Reifendrucks eines Zweirades.

Bei diesem Zweirad kann es sich insbesondere um ein solches handeln, welches mit einem mittels eines Akkumulators betriebenen Elektromotor ausgerüstet und insbesondere als Pedelec, E-Bike oder LEV (Light Electric Vehicle) ausgebildet ist. Grundsätzlich kann das erfindungsgemäße Verfahren jedoch auch bei Zweirädern ohne elektromotorische Unterstützung angewendet werden.

Zur Erhöhung des Fahrkomforts, insbesondere von Pedelecs bzw. LEVs, sind Ballonreifen (vorzugsweise mit einer Breite von mindestens 2 inch) üblich. Neben einer Erhöhung des Fahrkomforts bieten die Ballonreifen auch den Vorteil einer Erhöhung der Sicherheit. Die Ausnutzung dieser positiven Eigenschaften der Ballonreifen ist allerdings abhängig vom Druck in der Bereifung. Dieser muss gemäß dem Stand der Technik in Abhängigkeit vom Fahrergewicht und dem gewünschten Fahrkomfort in der Regel empirisch ermittelt und manuell eingestellt werden, beispielsweise mittels einer Luftpumpe. Dies führt in der Praxis dazu, dass über 90 % der Nutzer nicht mit dem für sie idealen Reifendruck unterwegs sind und der Fahrkomfort etc. suboptimal ist. Bei zu niedrigem Reifendruck stellt sich ein erhöhter Reifenverschleiß ein und es liegt eine ineffiziente Fortbewegung vor, d.h. der Fahrer benötigt mehr Kraft zum Fahren bzw. die elektromotorische Unterstützung wird stärker beansprucht als es eigentlich erforderlich ist. Bei zu hohem Reifendruck hingegen besteht ein Sicherheitsrisiko aufgrund zu geringer Traktion und der Fahrkomfort ist eingeschränkt (suboptimale Dämpfungsfunktion der Bereifung). Die Reifendruckkontrolle gemäß dem Stand der Technik sowie deren Justierung ist vergleichsweise aufwendig und mühsam.

Vor diesem Hintergrund liegt der Erfindung die Aufgabe zugrunde, ein Verfahren anzugeben, welches die Einstellung eines geeigneten Reifendrucks erleichtert.

Erfindungsgemäß wird diese Aufgabe gelöst durch ein Verfahren zur, insbesondere personengewichtsabhängigen, Einstellung des Reifendrucks eines Zweirades, wobei beim Zweirad unter der Einwirkung der Gewichtskraft der das Zweirad nutzenden Person sowie des Zweirad-Eigengewichts die Abplattung A mindestens eines Reifens des Zweirads, vorzugsweise beider Reifen, im Aufstandpunkt P des Reifens gemessen wird und daraufhin diese Abplattung A durch Einfüllen von Gas in den und/oder Ablassen von Gas aus dem Reifen auf einen Abplattungs-Sollwert $A_s$ eingestellt wird. Dieses Einfüllen und/oder Ablassen von Gas kann in Rahmen der Erfindung manuell und/oder automatisch erfolgen.

Die Abplattung A im Sinne der erfindungsgemäßen Lehre meint

$$A = ( h_0 - h_N ) / h_0 \ [\%].$$

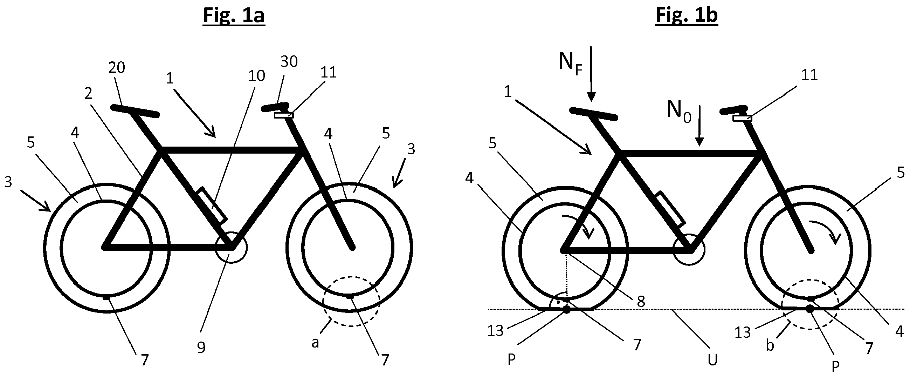

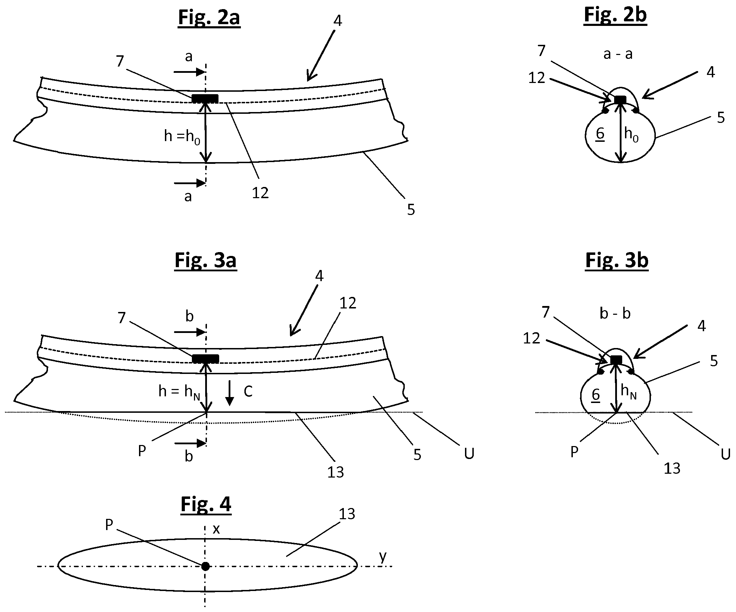

Hierbei ist die Größe $h_0$ der radiale, im Reifenquerschnitt gesehen mittige freie Abstand zwischen dem der Reifeninnenfläche zugewandten Reifenfelgengrund und der Innenoberfläche des Reifens ohne Gewichtsbelastung, also ohne Nutzer und bei vom Boden abgehobenem Zweirad (s. Fig. 2a, b). In diesem Zustand ist in einer Seitenansicht die Außenoberfläche des Reifens umlaufend kreisförmig ausgebildet (Fig. 1a). Die Größe $h_N$ definiert ebenfalls diesen Abstand, jedoch bei auf einem Untergrund stehendem bzw. fahrendem Zweirad unter Einwirkung der Gewichtskraft der das Zweirad nutzenden Person sowie des Eigengewichts des Zweirads. In diesem Fall weist der Reifen im Kontaktbereich mit dem Untergrund eine Abflachung auf (s. Fig. 1b, 3a, b). Je ausgeprägter dieser Abflachungsbereich ist, desto größer ist die Abplattung. Sofern beispielsweise der Reifen nur unter einem geringen Überdruck steht oder gar kein Überdruck vorliegt (Reifenpanne), ist die Größe $h_N$ sehr klein bzw. je nach Felgengeometrie sogar 0 und die Abplattung gemäß o.g. Definition ist zumindest nahe 100 %. Bei geringer Gewichtsbelastung hingegen (z.B. nur durch das Eigengewicht des Zweirads, ohne Fahrer) ist der Abstand $h_N$ nur geringfügig kleiner als $h_0$ und die Abplattung A beträgt nur wenige Prozent, bzw. bei vom Boden abgehobenem Zweirad ist $h_0 = h_N$ und somit A = 0.

Der Aufstandpunkt P eines Reifens befindet im zuvor beschriebenen Abflachungsbereich des Reifens genau lotrecht unterhalb der entsprechenden Radachse und im Reifenquerschnitt gesehen mittig an der inneren Oberfläche des Reifens. Er stellt somit in der Regel in einer Draufsicht den symmetrischen Mittelpunkt des Abflachungsbereichs dar.

Erfindungsgemäß wurde also erkannt, dass die Abplattung A eine sinnvolle Kenngröße für die Einstellung Reifendrucks ist, um hohen Fahrkomfort, gute Traktion sowie geringen Energieverbrauch zu gewährleisten. Diese Abplattung A wird nun erfindungsgemäß durch entsprechendes Einfüllen bzw. Ablassen von Gas, insbesondere Luft, aus dem Reifen auf einen Abplattungs-Sollwert $A_s$ gezielt eingestellt. Im Rahmen der Erfindung hat sich überraschenderweise herausgestellt, dass der optimale Wert für die Abplattung A zwar beispielsweise je nach zu befahrendem Untergrund variiert (auf Schotter z.B. ist für die Abplattung ein höherer Wert optimal als auf einer ebenen Asphaltstraße), jedoch weitgehend bzw. sogar vollkommen unabhängig vom Gewicht der das Zweirad nutzenden Person ist. Dies hat natürlich zur Folge, dass bei einer Person mit großem Gewicht die Reifen auf einen höheren Druck eingestellt werden müssen, um dieselbe Abplattung A zu erzielen wie bei der Nutzung des Zweirads durch eine Person mit niedrigerem Gewicht. Erfindungsgemäß wurde also erkannt, dass das Maß für den optimalen Reifendruck des Zweirads die Abplattung A, also das Ausmaß der Deformation des Reifens im Aufstandspunkt P der Bereifung ist. Dieses Maß ist - wie erläutert - unabhängig vom Gewicht des Fahrers und ist maßgeblich hinsichtlich der Nutzung der Federungseigenschaften des Reifens.

Auf Cross-Strecken ist ferner ein günstiger Wert für die Abplattung beispielsweise $A \approx 30\%$, da bei diesem Wert auf der unebenen Strecke ein hoher Fahrkomfort und eine hohe Traktion vorliegt. Auf glatten Asphaltstraßen können für die Aplattung hingegen etwas niedrigere Werte eingestellt werden (z.B. $A \approx 25\%$), um z.B. bei der Ausführung des Zweirads als Pedelec den Akkumulator für die elektromotorische Unterstützung zu schonen und damit dessen Reichweite zu erhöhen. Erfindungsgemäß kann nun die Abplattung auch vom Nutzer fahrstil- und/oder fahrkomfort- und/oder energieverbrauchsabhängig eingestellt werden. Im Rahmen der Erfindung liegt es daher insbesondere, dass der Abplattungs-Sollwert $A_s$ im Bereich von 10 bis 50 %, insbesondere 20 bis 40 %, besonders bevorzugt 25 bis 35 % liegt. Der Abplattungs-Sollwert $A_s$ ist zweckmäßigerweise als Intervall mit einer Intervallbreite > 0 definiert. Dieses Intervall kann 0,5 - 5 % , z.B. 1 - 4 %, insbesondere 2 - 3 % breit sein; beispielsweise kann ein 2 % breites Sollwert-Intervall $A_s = 29 \div 31\%$ eingestellt werden. Hierdurch kann insbesondere bei einer automatisierten Regelung des Abplattungs-Sollwertes $A_s$ während der Fahrt ein ständiges Nachregeln aufgrund minimalster Abweichungen vom Sollwert ("Reglerrattern") vermieden werden.

Im Rahmen der Erfindung liegt es ferner insbesondere, dass die Abplattung A mittels eines an der Reifenfelge, vorzugsweise am Reifenfelgengrund, montierten Sensors gemessen wird. Zweckmäßigerweise misst der Sensor den radialen Abstand zur Reifeninnenfläche am Aufstandspunkt P des Reifens. So kann beispielsweise zur Bestimmung der Abplattung A im Reifen innerhalb des Reifenhohlraums auf der Felge ein Abstandssensor angebracht werden, welcher während des Umlaufs über den Abflachungsbereich genau beim Überstreichen des Aufstandspunkts P den radialen Abstand der Reifenfelgengrundes zum Aufstandspunkt P an der Reifeninnenfläche misst und so 1 x pro Radumdrehung die Abplattung A bestimmt. Sofern während der Fahrt der Abstandssensor permanent bzw. mit einer sehr hohen Frequenz (=deutlich höher als die Drehfrequenz des Rades, z.B. mehr als 10 mal, insbesondere mehr als 30 mal so hoch) misst, ist der Wert $h_N$ der während eines Radumlaufs niedrigste vom Sensor ermittelte Messwert, da beim Durchlauf des Aufstandspunkts P der Abstand zwischen Felgengrund und Innenoberfläche des Reifens ein Minimum erreicht. Der Sensor kann genau an der Oberfläche des Reifenfelgengrundes positioniert oder aber auch zu diesem, z.B. radial, versetzt angeordnet sein. In diesem Fall misst der Sensor dann zwar nicht direkt den Wert $h_N$, über den festen Abstand zwischen Sensor und Felgengrund kann $h_N$ jedoch dann errechnet werden. Der Sensor überträgt das Messsignal zweckmäßigerweise kabellos, vorzugsweise an einen Bordcomputer des Zweirades. Die Messsignalübertragung kann beispielsweise über Bluetooth erfolgen. Der Sensor selbst kann beispielsweise mittels Ultraschall oder Laser arbeiten, d.h. über Ultraschall/Laser wird der Abstand vom Sensor zum Aufstandspunkt P des Reifens ermittelt. Alternativ zur Anbringung des Sensors an der Reifenfelge liegt es aber auch im Rahmen der Erfindung, dass der Sensor anderweitig am Zweirad montiert ist, beispielsweise am Zweiradrahmen oder am Lenker, z.B. der Gabel. In diesem Fall misst der Sensor den Abstand H von seinem Montageort zum Boden. Die Abplattung A kann dann mit Hilfe der Differenz von Abstandswert $H_0$ im unbelasteten Zustand des Zweirads (Eigengewicht wird hier durch eine entsprechende Kraft nach oben gerade kompensiert, d.h. bei einer Erhöhung dieser Kraft hebt das Zweirad vom Boden ab) und Abstandswert $H_N$ während der Fahrt mit Gewichtskraft durch Fahrer und Zweirad errechnet werden. Im Rahmen der Erfindung liegt es ferner auch, dass die Abplattung als Absolutwert in mm ermittelt und mit einem entsprechenden, vom Reifenhersteller als optimal angegebenen Wert verglichen und mit dem erfindungsgemäßen Verfahren auf diesen Optimalwert eingestellt wird.

Im Rahmen der Erfindung liegt es ferner insbesondere, dass die Abplattung A des Reifens durch automatisches Einfüllen und/oder Ablassen von Gas auf dem Abplattungs-Sollwert $A_s$ gehalten wird. Da - wie eingangs erläutert - das Zweirad zweckmäßigerweise mit einer mittels eines Akkumulators betriebenen elektromotorischen Unterstützung ausgerüstet ist und insbesondere als Pedelec, E-Bike oder LEV ausgebildet ist, kann das Einfüllen und/oder das Ablassen von Gas mit Hilfe des ohnehin schon vorhandenen Akkumulators erfolgen. Zweckmäßigerweise erfolgt also das Befüllen des Reifens mit Gas und/oder das Ablassen von Gas aus dem Reifen über ein am Zweirad montiertes, vorzugsweise batteriebetriebenes, Reifenfüllsystem, welches zur Stromversorgung an den Akkumulator angeschlossen sein kann. Das Befüllen oder Ablassen von Gas wird zweckmäßigerweise mittels des Bordcomputers des Zweirades gesteuert und / oder geregelt.

In Abhängigkeit vom gewünschten Fahrmodus (z.B. je nach Untergrund maximaler Komfort → höhere Abplattung A oder maximale Energieeffizienz → niedrige Abplattung A, etc.) kann beispielsweise der Bordcomputer des Zweirads eine Empfehlung zur Justierung des Reifendrucks errechnen. Bei einem an den Bordcomputer angeschlossenen Reifenfüllsystem erfolgt die entsprechende Einstellung auf den entsprechenden Abplattungs-Sollwert $A_s$ durch Einfüllen bzw. Ablassen von Gas dann automatisch. Mit dieser automatisierten Einstellung der Abplattung A auf den Sollwert $A_s$ können in vorteilhafterweise auch kleine Leckagen im Reifen bis zum Erreichen der nächsten Werkstatt kompensiert werden.

Das Reifenfüllsystem kann beispielsweise über eine Gas-Kartusche (z.B. mit $CO_2$ gefüllt) verfügen, welche unter Überdruck steht. Auch eine Reifendruckerhöhung über einen kleinen Kompressor liegt im Rahmen der Erfindung. Ferner weist das Reifenfüllsystem zweckmäßigerweise auch eine Vorrichtung auf, die ein kontrolliertes Ablassen von Gas aus dem Reifen ermöglicht, z.B. eine Reifenventil-Betätigungsvorrichtung. Ggf. kann das Reifenfüllsystem oder Teile davon an dem entsprechenden Rad selbst montiert sein, z.B. an der Reifenfelge und/oder an den entsprechenden Radspeichen und/oder an der entsprechenden Radnabe.

Im Rahmen der Erfindung liegt es ferner, dass der Abplattungs-Sollwert $A_S$ in Abhängigkeit von der Beschaffenheit des Fahruntergrundes eingestellt wird. So kann z.B. - abhängig vom gewünschten Fahrkomfort bzw. dem zu befahrenden Untergrund - durch den Fahrer der Abplattungs-Sollwert $A_S$ eingestellt werden, beispielsweise über den Bordcomputer. So kann der Fahrer z.B. bei einer Fahrt auf Schotter eine größere Abplattung wünschen, um bessere Dämpfungseigenschaften zu erhalten, als bei einer Fahrt auf einer glatten Asphaltstraße, welche eine geringere Abplattung ermöglicht. Im Rahmen der Erfindung liegt es auch, dass die Einstellung des Abplattungs-Sollwertes $A_S$ in Abhängigkeit des Untergrundes automatisch über den Bordcomputer erfolgt, indem beispielsweise dieser im Signalaustausch mit einer Einrichtung zur Erfassung der Untergrundbeschaffenheit (z.B. Kamera u/o Vibrationsmessgerät etc.) steht.

Gegenstand der Erfindung ist auch ein Zweirad zur Durchführung des zuvor beschriebenen Verfahrens mit

- einem Zweiradrahmen und

- zwei Rädern,

- wobei die Räder jeweils einen auf eine Reifenfelge aufgezogenen, mit Druckgas befüllten Reifen aufweisen und

- wobei mindestens ein, vorzugsweise beide Räder, mit mindestens einem, vorzugsweise an der Reifenfelge angeordneten, Sensor ausgerüstet sind, mit dem die Abplattung A des entsprechenden Reifens erfassbar ist.

Im Folgenden wird die Erfindung anhand einer lediglich ein Ausführungsbeispiel darstellenden Zeichnung ausführlich erläutert. Es zeigen schematisch:

Fig. 1a: ein erfindungsgemäßes Zweirad, welches vom Boden abgehoben ist;

Fig. 1b das in Fig. 1 a dargestellte Zweirad, welches sowohl durch das Eigengewicht ($N_0$) des Zweirades als auch durch die Gewichtskraft ($N_F$) des Zweiradnutzers belastet ist;

Fig. 2a: den Ausschnitt a in Fig. 1a;

Fig. 2b: den Schnitt a - a in Fig. 2a;

Fig. 3a: den Ausschnitt b in Fig. 1b,

Fig. 3b: den Schnitt b - b in Fig. 3a und

Fig. 4: die Draufsicht c in Fig. 3a.

Die Fig. 1a zeigt ein Zweirad 1 mit einem Zweiradrahmen 2 und zwei Rädern 3 sowie Sattel 20 und Lenker 30, wobei die Räder 3 jeweils einen auf eine Reifenfelge 4 aufgezogenen, mit Druckgas befüllten Reifen 5 aufweisen. Beide Räder 3 sind jeweils mit einem im Randbereich des von Reifenfelge 4 und Reifen 5 gebildeten Hohlraums 6 (s. Fig. 2b, 3b) angeordneten Abstandssensor 7 ausgerüstet, mit dem die (wie zuvor definierte) Abplattung A des entsprechenden Reifens 5 erfassbar ist. Die Abplattung A wird jeweils am Aufstandspunkt P des Reifens 5 ermittelt. Dieser Aufstandspunkt P ist in Fig. 1b, 3a, 3b und 4 dargestellt. Er befindet sich genau lotrecht unterhalb der entsprechenden Radachse 8 (s. Fig. 1 b linkes Rad 3) und wird im Folgenden noch näher erläutert. Das dargestellte Zweirad 1 ist als Pedelec ausgebildet und entsprechend mit einer Fahrerunterstützung in Form eines Elektromotors 9 ausgerüstet, welcher mit einem Akkumulator 10 betrieben wird. Den Figuren 1a und 1b ist ferner zu entnehmen, dass das Zweirad 1 über einen Bordcomputer 11 verfügt, an den die Abstandssensoren 7 ihre Messsignale drahtlos übertragen können.

In Fig. 1 a sind die Reifen 5 des Zweirades 1 ohne Einwirkung des Zweirad-Eigengewichts bzw. einer das Zweirad 1 nutzenden Person dargestellt. In diesem Fall ist in der Seitenansicht gemäß Fig. 1a die äußere Oberfläche der Reifen 5 vollständig umlaufend kreisförmig ausgebildet. In diesem Zustand weist der in den Fig. 2a, b dargestellte radiale Abstand h zwischen dem Reifenfelgengrund 12 und der inneren Oberfläche des Reifens 5 den Wert $h = h_0$ auf. Folglich misst in diesem Zustand der am Rand des Hohlraums 6 angeordnete Abstandssensor 7, welcher im Ausführungsbeispiel exakt an der Oberfläche des Reifenfelgengrundes 12 angeordnet ist, genau diesen Abstand $h_0$. Der genannte Reifenfelgengrund 12 befindet sich gemäß Fig. 2b,3b im Reifenquerschnitt gesehen genau in der Mitte.

In der Darstellung gemäß Fig. 1b ist nun das Zweirad während der Fahrt dargestellt, welches hierbei einerseits durch sein Eigengewicht $N_0$ und andererseits durch die Gewichtskraft $N_F$ des Fahrers des Zweirades 1 belastet wird. Dies hat zur Folge, dass die beiden Räder 3 jeweils einen durch die Kompressibilität der Reifen 5 bedingten Kontaktbereich (im folgenden Abflachungsbereich 13 genannt) mit dem Untergrund U ausbilden, der in der Draufsicht gemäß Fig. 4 ellipsenförmig ausgebildet ist. Damit einher geht eine Reduzierung des radialen Abstandes h zwischen dem Reifenfelgengrund 12 und der inneren Oberfläche des Reifens 5 auf den Wert $h = h_N$. Anhand der Figuren 3a,b ist erkennbar, dass die Messsensoren 7 jeweils diesen radialen Abstand $h_N$ zur Reifeninnenfläche am Aufstandspunkt P des Reifens messen. Dieser in Figur 3a in der Seitenansicht und in Fig. 3b im Querschnitt dargestellte Sachverhalt führt in beiden Reifen 5 zur Ausbildung einer Abplattung A > 0, wie zuvor definiert. Die Reduzierung des radialen Abstandes auf den Wert $h_N$ kann nun von den Abstandssensoren 7 erfasst werden, wenn sie während der Fahrt pro Radumdrehung jeweils einmal genau beim Überstreichen des jeweiligen Aufstandspunkt P eine Abstandsmessung durchführen (s. "Momentaufnahme" gemäß Fig 1 b). Sofern die Abstandssensoren 7 dauernd bzw. mit einer sehr hohen Frequenz (z.B. Messfrequenz mindestens als 50 mal so hoch wie die Drehfrequenz des Rades 5) messen, ist $h_N$ der während eines Radumlaufs niedrigste ermittelte Messwert, da der Abstand h bei Erreichen des Aufstandspunkts P den kleinsten Wert annimmt. In den Figuren 1a, 2a und 2b beträgt hingegen wegen h = $h_0$ die Abplattung A = 0.

Die Abplattung A wird vom Bordcomputer 11 mithilfe der von den Abstandssensoren 7 erfassten Messsignale $h_N$ errechnet. Der Bordcomputer 11 vergleicht die tatsächliche Abplattung A beider Reifen 5 mit einem Abplattungs-Sollwert-Intervall $A_s$, z.B. $A_s$ = 29 ÷ 31 %, das beispielsweise für den entsprechenden Untergrund U hinsichtlich Fahrkomfort, Traktion etc. optimal ist. Die Abplattung A der Reifen 5 wird nun vom Bordcomputer 11 während der Fahrt durch automatisches Einfüllen und/oder Ablassen von Gas auf einen Wert innerhalb des Abplattungs-Sollwert-Intervall $A_s$ eingeregelt. Das automatische Befüllen der Reifen 5 mit Gas sowie auch das Ablassen von Gas aus den Reifen 5 erfolgt hierbei über ein am Zweirad 2 montiertes (nicht näher dargestelltes) Reifenfüllsystem, welches vom Akkumulator 10 mit Strom versorgt wird. Das Reifenfüllsystem wird vom Bordcomputer 11 so angesteuert, dass dieses durch Einfüllen bzw. Ablassen von Gas die Abplattung A in beiden Reifen 5 automatisch innerhalb des gewünschten Abplattungs-Sollwert-Intervalls $A_s$ hält. Das Abplattungs-Sollwert-Intervall $A_s$ kann vom Fahrer selbst über den Bordcomputer 11 eingestellt werden oder alternativ vom Bordcomputer 11 automatisch. Hierzu steht der Bordcomputer im Signalaustausch mit einer (nicht dargestellten) Einrichtung zur Erfassung der Beschaffenheit des Untergrundes U (Schotter, Asphalt etc.), die als Kamera und/oder Vibrationsmessgerät oder dergleichen ausgebildet sein kann.

Im Folgenden wird der Sachverhalt im Abflachungsbereich 13 noch etwas näher erläutert. Wie bereits erwähnt, befindet sich der Aufstandspunkt P im Abflachungsbereich 13 eines Reifens 5 genau lotrecht unterhalb der entsprechenden Radachse 8 (s. Fig. 1b links). Sowohl in der Seitenansicht gemäß Fig. 3a als auch im Reifenquerschnitt gesehen (Fig. 3b) liegt der Aufstandspunkt P genau in der Mitte des Abflachungsbereiches 13. Dies ist auch anhand der in Fig. 4 dargestellten Draufsicht c (vergl. Fig. 3a) auf den Abflachungsbereich 13 erkennbar. Im Ausführungsbeispiel ist der Abflachungsbereich 13 in dieser Draufsicht als symmetrische Ellipse ausgebildet und der Aufstandspunkt P befindet sich genau im Zentrum dieser Ellipse, also im Schnittpunkt der beiden Symmetrieachsen x, y.

**Patentansprüche**

1. Verfahren zur, insbesondere personengewichtsabhängigen, Einstellung des Reifendrucks eines Zweirades (1), wobei beim Zweirad (1) unter der Einwirkung der Gewichtskraft ($N_F$) der das Zweirad (1) nutzenden Person sowie des Zweirad-Eigengewichts ($N_0$) die Abplattung (A) mindestens eines Reifens (5) des Zweirads (1), vorzugsweise beider Reifen (5), im Aufstandspunkt (P) des Reifens (5) gemessen wird und daraufhin diese Abplattung (A) durch Einfüllen von Gas in den und/oder Ablassen von Gas aus dem Reifen (5) auf einen Abplattungs-Sollwert ($A_s$) eingestellt wird.

2. Verfahren nach Anspruch 1, **dadurch gekennzeichnet, dass** der Abplattungs-Sollwert ($A_s$) im Bereich von 10 bis 50 %, insbesondere 20 bis 40 %, besonders bevorzugt 25 bis 35 % liegt.

3. Verfahren nach Anspruch 1 oder 2, **dadurch gekennzeichnet, dass** die Abplattung (A) mittels eines an der Reifenfelge (4), vorzugsweise am Reifenfelgengrund (12), montierten Sensors (7) gemessen wird.

4. Verfahren nach Anspruch 3, **dadurch gekennzeichnet, dass** der Sensor (7) den radialen Abstand zur Reifeninnenfläche am Aufstandspunkt (P) des Reifens (5) misst.

5. Verfahren nach Anspruch 3 oder 4, **dadurch gekennzeichnet, dass** der Sensor (7) das Messsignal kabellos überträgt, vorzugsweise an einen Bordcomputer (11) des Zweirades (1).

6. Verfahren nach einem der Ansprüche 1 bis 5, **dadurch gekennzeichnet, dass** das Zweirad (1) mit einem mittels eines Akkumulators (10) betriebenen Elektromotor (9) ausgerüstet und insbesondere als Pedelec, E-Bike oder LEV ausgebildet ist.

7. Verfahren nach einem der Ansprüche 1 bis 6, **dadurch gekennzeichnet, dass** die Abplattung (A) des Reifens (5) durch automatisches Einfüllen und/oder Ablassen von Gas auf dem Abplattungs-Sollwert ($A_s$) gehalten wird.

8. Verfahren nach Anspruch 7, **dadurch gekennzeichnet, dass** das Befüllen des Reifens (5) mit Gas und/oder das Ablassen von Gas aus dem Reifen (5) über ein am Zweirad (1) montiertes, vorzugsweise batteriebetriebenes, Reifenfüllsystem erfolgt.

9. Verfahren nach Anspruch 7 oder 8, **dadurch gekennzeichnet, dass** das automatische Einfüllen oder Ablassen von Gas mittels eines Bordcomputers (11) des Zweirades (1) gesteuert und/oder geregelt wird.

10. Verfahren nach Anspruch 8 oder 9, **dadurch gekennzeichnet, dass** das Reifenfüllsystem zur Stromversorgung an den Akkumulator (10) des Zweirades (1) angeschlossen ist.

11. Verfahren nach einem der Ansprüche 1 bis 10, **dadurch gekennzeichnet, dass** der Abplattungs-Sollwert ($A_s$) in Abhängigkeit von der Beschaffenheit des Fahruntergrundes (U) eingestellt wird.

12. Zweirad (1) zur Durchführung des Verfahrens nach einem der Ansprüche 1 bis 11 mit

    - einem Zweiradrahmen (2) und
    - zwei Rädern (3),

wobei die Räder (3) jeweils einen auf eine Reifenfelge (4) aufgezogenen, mit Druckgas befüllten Reifen (5) aufweisen und
wobei mindestens ein, vorzugsweise beide Räder (3), mit mindestens einem, vorzugsweise an der Reifenfelge (4) angeordneten, Sensor (7) ausgerüstet ist, mit dem die Abplattung (A) des entsprechenden Reifens (5) erfassbar ist.

**Fig. 1a**

**Fig. 1b**

EP 3 260 311 A1

## Fig. 2a

## Fig. 2b

a - a

## Fig. 3a

## Fig. 3b

b - b

## Fig. 4

Europäisches
Patentamt

European
Patent Office

Office européen
des brevets

# EUROPÄISCHER RECHERCHENBERICHT

Nummer der Anmeldung

EP 17 17 3903

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | ES 2 536 936 A1 (UNIV LA RIOJA [ES]) 29. Mai 2015 (2015-05-29) * Zusammenfassung; Abbildungen 1, 2, 5 * * Seite 11, Zeile 14 - Seite 12, Zeile 15 * ----- | 1-11 | INV. B60C23/00 B60C23/06 |
| X | EP 0 197 813 A1 (RENAULT [FR]) 15. Oktober 1986 (1986-10-15) * Zusammenfassung; Abbildung 1 * * Seite 3, Zeile 10 - Zeile 25 * ----- | 1-10 | |
| X,P | WO 2017/036641 A1 (BOSCH GMBH ROBERT [DE]) 9. März 2017 (2017-03-09) * Zusammenfassung * * Seite 11, Zeile 15 - Zeile 29; Abbildungen 1, 2-2, 3-5 * ----- | 12 | |
| | | | RECHERCHIERTE SACHGEBIETE (IPC) |
| | | | B60C |

Der vorliegende Recherchenbericht wurde für alle Patentansprüche erstellt

| Recherchenort | Abschlußdatum der Recherche | Prüfer |
|---|---|---|
| München | 11. Oktober 2017 | Ozdemir, Anil |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 17 3903

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-10-2017

| Im Recherchenbericht angeführtes Patentdokument | Datum der Veröffentlichung | Mitglied(er) der Patentfamilie | Datum der Veröffentlichung |
|---|---|---|---|
| ES 2536936 A1 | 29-05-2015 | KEINE | |
| EP 0197813 A1 | 15-10-1986 | DE 3661247 D1<br>EP 0197813 A1<br>FR 2579324 A1 | 29-12-1988<br>15-10-1986<br>26-09-1986 |
| WO 2017036641 A1 | 09-03-2017 | DE 102015216587 A1<br>WO 2017036641 A1 | 02-03-2017<br>09-03-2017 |

EPO FORM P0461

Für nähere Einzelheiten zu diesem Anhang : siehe Amtsblatt des Europäischen Patentamts, Nr.12/82